# EUROPEAN PATENT APPLICATION

(11) **EP 0 924 711 A2**
(43) Date of publication of application: **23.06.1999**
(21) Application number: 98305946.0
(22) Date of filing: 27.07.1998
(51) Int. Cl.: H01B 3/44, H01B 7/00

(54) **Multiconductor electrical cable**

(30) Priority: 19.12.1997 US 994371
(71) Applicant: CAMCO INTERNATIONAL INC., Houston, Texas 77054 (US)
(72) Inventor: Bruewer, Timothy B., Lawrence, KS 66046 (US)
(74) Representative: Carter, Gerald

(57) **Abstract**

A multiconductor electrical cable (28) for use in a subterranean wellbore has improved resistance to swelling caused by the absorption of deleterious fluids. The cable (28) comprises a plurality of electrical conductors (32); at least one layer (34) of an insulation material surrounding the plurality of electrical conductors; a jacket (36) of elastomeric material surrounding the insulated electrical conductors; a fluid barrier (38) surrounding the jacket; and an outer armour (40) surrounding the fluid barrier. The fluid barrier (38) prevents hydrocarbons and water from being absorbed into the jacket (36) of elastomeric material, thereby preventing the swelling of the cable. The outer armour (40) can include a coating (44) of thermoset and/or thermoplastic material to prevent corrosion of the cable's armour, so as to better contain any swelling of the cable.

## Description

The present invention relates to multiconductor electrical cables and, more particularly, to multiconductor electrical cables for use in subterranean wellbores.

Multiconductor electrical cables that are used to power wellbore equipment, such as electrical submergible pumping systems, must be capable of withstanding the high temperatures, high pressures and/or corrosive fluids often encountered within subterranean wellbores. As used herein, the term "high temperature" means temperatures of greater than about 180 F and as high as about 500 F. The term "high pressure" means pressures as high as about 5,000 psi. Further, the term "corrosive fluids" means liquids and gases, such as liquids and/or gases containing hydrogen sulfide, carbon dioxide, brine and the like, which can cause degradation to cable insulating materials and/or corrosion to the electrical conductors.

Prior cables include several layers of different materials to either protect the copper conductors from mechanical damage and/or from damage from corrosive fluids. Usually, the copper conductors are sheathed in one or more layers of insulating materials, such as ethylene propylene diene methylene terpolymer ("EPDM"), and a thin sheath of extruded lead to act as a fluid barrier. Often, a jacket of EPDM or nitrile rubber is then applied around the conductors. As a final protection, an outer metallic armour is applied over the jacket and the electrical conductors.

While EPDM and other similar compounded materials provide excellent electrical and temperature stability in most wellbore applications, there is a major problem in their long term use in a wellbore. This problem is that the jacket's elastomeric material absorbs water and/or oil and then swells, thereby directly leading to structural and electrical failures of the cable. Common methods to minimize swelling have been to use elastomeric compounds which have a relatively high degree of physical strength, as measured by resistance to elongation, and a relatively high tensile strength. These compounds use relatively high degrees of cross-link density and/or fine particle size filler materials. However, these compounds show a loss of resistance to mechanical damage, especially in wellbore environments where the insulation is subjected to torsional stress.

An outer metallic armour is used to protect the electrical cable from physical damage and to restrain the swelling of the cable. The armour provides hoop strength to retain a uniform outer diameter of the cable. The armour is usually made from helically wrapped and interlocking metal material, such as galvanized steel. A problem encountered in certain wellbore environments is that the metallic armour will corrode, which greatly reduces the armours ability to maintain the outer diameter of the cable and contain the swelling jacket of elastomeric material. Once significant corrosion has occurred, the armour fails, and the cable is then free to swell, thereby directly leading to mechanical and electrical failures of the cable.

There is a need for a multiconductor electrical cable that has improved resistance to the damaging effects of swelling by having improved protection against absorption of the swelling agents and/or improved corrosion resistance for the armour.

The present invention has been contemplated to overcome the foregoing deficiencies and meet the above described needs. Specifically, the present invention is a multiconductor electrical cable for use in a subterranean wellbore that has increased resistance to swelling by preventing hydrocarbons or water from contacting the jacket of elastomeric material, and/or by preventing corrosion of the metallic outer protective armour so that any swelling will be contained.

The cable of the present invention generally comprises a plurality of electrical conductors with at least one layer of an insulation material surrounding each of the electrical conductors. A jacket of elastomeric material surrounds the insulated electrical conductors. A fluid barrier surrounds the jacket; and an outer protective armour surrounds the fluid barrier. The fluid barrier, such as a wrap of a fluorocarbon material, prevents hydrocarbons and water from being absorbed into the jacket of elastomeric material, thereby preventing the swelling of the cable. As an alternative or in addition to the fluid barrier, the outer protective armour can include at least one layer of a thermoset or thermoplastic coating to prevent corrosion of the metallic armour.

### Brief description of the drawings:

Figure 1 is a cross-sectional, elevational view of an electric submergible pumping system (ESP) suspended within a subterranean wellbore.

Figure 2 is a cross-sectional, perspective view of one preferred embodiment of a multi-conductor electrical cable of the present invention.

Figure 3 is a cross-sectional side view of an alternate preferred embodiment of a multi-conductor electrical cable of the present invention.

As described above, the present invention comprises a multiconductor electrical cable for use in subterranean wellbores. The electrical cable of the present invention is made to withstand relatively high temperatures, high pressures and corrosive fluids encountered within subterranean wellbores; however, it should be understood that the electrical cable of the present invention can also be used in less difficult applications, such as surface power transmission, under water uses, and the like. As used herein, the term "high temperature" means temperatures of greater than about 180 F and as high as about 500 F. The term "high pressure" means pressures as high as about 5,000 psi. Further, the term "corrosive fluids" means liquids and gases which can cause degradation to insulating materials and/or corrosion to the electrical conductors, such as liquids and/or gases containing certain hydrocarbons, hydrogen sulfide, carbon dioxide, brine, and the like.

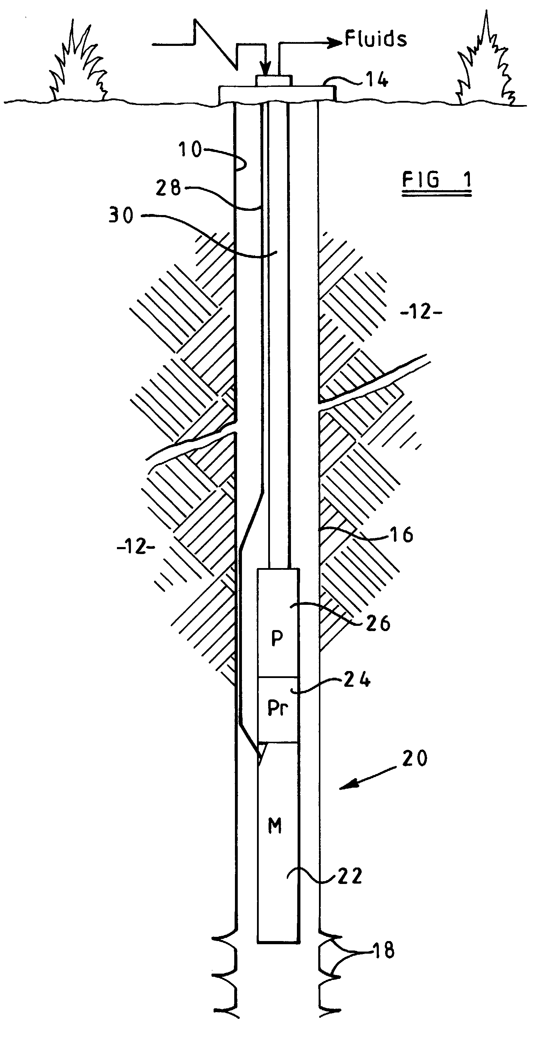

To better understand the present invention, reference will be made to the accompanying drawings. Figure 1 shows a wellbore 10, used for recovering fluids such as water and/or hydrocarbons, that penetrates one or more subterranean earthen formations 12. The wellbore 10 includes a wellhead 14 removably connected to an upper portion of a production tubing and/or casing string 16, as is well known to those skilled in the art. If the casing string 16 extends across a fluid producing subterranean formation 12, then the casing string 16 can include at least one opening or perforations 18 for permitting fluids to enter the interior thereof. An electric submergible pumping system ("ESP") 20 is shown suspended within the casing string 16, and generally includes an electric motor 22, an oil-filled motor protector 24, and a pump 26. The ESP 20 is shown in Figure 1 as deployed in a "conventional" configuration, with the motor 22 below the pump 26; however, it should be understood that the present invention can be used when the ESP 20 is in an "upside down" configuration, commonly known as a "bottom intake system."

For the purposes of this discussion, the terms "upper" and "lower", "above" and "below", "uphole" and "downhole", and "upwardly" and "downwardly" are relative terms to indicate position and direction of movement in easily recognized terms. Usually, these terms are relative to a line drawn from an upmost position at the surface of the earth to a point at the center of the earth, and would be appropriate for use in relatively straight, vertical wellbores. However, when the wellbore is highly deviated, such as from about 60 degrees from vertical, or horizontal, these terms do not make sense and therefore should not be taken as limitations. These terms are only used for ease of understanding as an indication of what the position or movement would be if taken within a vertical wellbore.

A multiconductor cable 28 extends from a source of electrical power (not shown) at the earth's surface, through the casing 16, and is operatively connected to the motor 22. The cable 28 is preferably banded or strapped at intervals to a conduit 30, which is used to convey fluids from the pump 26 to the wellhead 14 at the earth's surface. The conduit 30 can be jointed tubing or coiled tubing, as is desired.

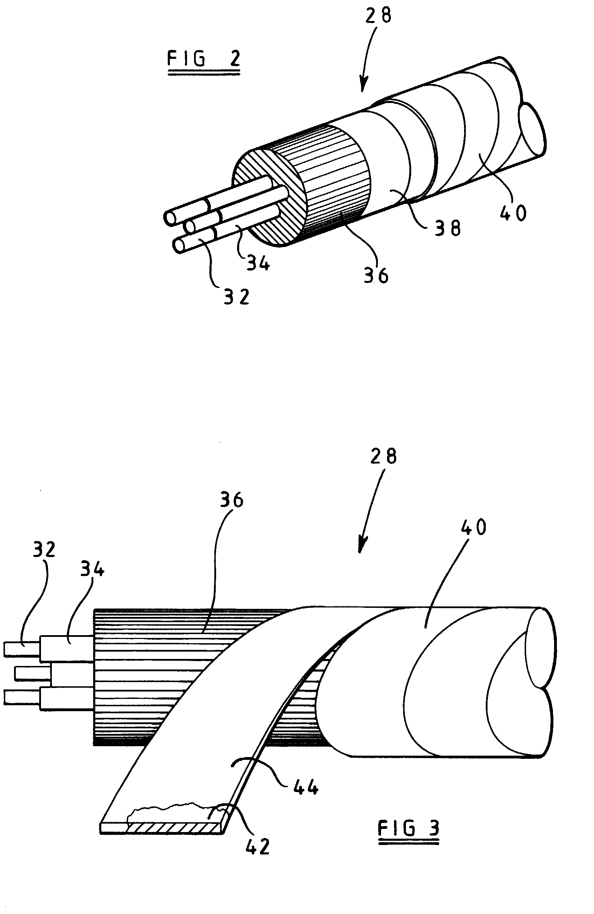

Figure 2 shows one preferred embodiment of an electrical cable 28 of the present invention with three electrical conductors 32 in a round configuration. The cable 28 also can be formed to have a relatively flat configuration, with the electrical conductors 32 in parallel and side-by-side relationship. The electrical conductors 32 are single drawn wires of copper or copper alloys, or are formed from a twist of several wires. For typical wellbore applications, the conductors 32 are single drawn wires having a diameter or gauge thickness of from about 0.160" (6 AWG) to about 0.414" (2/0 AWG). If the cable 28 is to be used in extremely corrosive environments, each of the conductors 32 can have a relatively thin coating (not shown) of lead, tin or alloys thereof, hot dipped, heat extruded, or electroplated thereon. One or more ground wires (not shown) may be included, as well as other wires, conductors, conduits, fibre optics, and the like, as may be used to transmit fluids and/or information and command signals through the power cable 28.

At least one of the electrical conductors 32, and preferably all of the conductors 32, is sheathed in at least one layer of an insulating material 34, selected from the group consisting of polyolefin elastomers, ethylene propylene diene methylene, ethylene propylene rubber, polychloroprene, polyimide, fluroelastomers, polypropylene, polyethylene, polyether, and copolymers, mixtures, blends and alloys thereof. If a polyether insulating material is selected, then preferred materials are selected from the group consisting of polyetherketone (PEK), polyetheretherketone (PEEK), polyetherketoneketone (PEKK), polyetherketoneetherketoneketone (PEKEKK), and mixtures, blends and alloys thereof.

The insulating material 34 is applied to the conductor 32 by spiral or longitudinal wrapping, or preferably by heat extrusion, as is well known to those skilled in the art. In addition, to protect the conductors 32 and the insulation material 34 from damage caused by corrosive fluids, a fluid barrier (not shown) may be applied to the outer surface of the insulating material 34. The fluid barrier can be spirally wrapped or extruded non-metallic materials, such as polyethylene, polypropylene, polyvinyl fluoride, polyvinylidene fluoride, fluorinated ethylene propylene, polytetrafluoroethylene, or blends, mixtures or alloys thereof. The fluid barrier is preferably one or more extruded layers of a metal, such as lead, tin, and/or alloys thereof.

A jacket 36 of elastomeric material is applied around the insulated conductors 32. The jacket 36 preferably comprises one or more extruded layers of nitrile rubber, ethylene propylene, ethylene propylene diene methylene terpolymer, polychloroprene, polyolefin elastomer, polyethylene, polypropylene, polyether, and copolymers, mixtures, blends and alloys thereof.

An important part of the present invention is the use of materials to prevent the swelling agents, such as hydrocarbons and water, from contacting the jacket 36 of elastomeric material. One means to accomplish this is to provide a fluid barrier 38 around the jacket 36. In one preferred embodiment, the fluid barrier 38 comprises at least one layer of wrapped or extruded material selected from the group consisting essentially of polyethylene, polypropylene, polyvinyl fluoride, polyvinylidene fluoride, fluorinated ethylene propylene, polytetrafluoroethylene, and blends, mixtures and alloys thereof. Preferably, the fluid barrier 38 is a helical wrap of TEFLON-brand fluoropolymer tape, having a thickness of application of from about 2 mils to about 6 mils.

An outer protective armour 40 is applied over the fluid barrier 38 and the jacket 36, as is well known to those skilled in the art. Typically, the armour 40 is formed from a helical wrap of a band of metallic material, such as galvanized steel. Another important part of the present invention is the use of materials to prevent corrosion from degrading the ability of the armour 40 from restraining the swelling of the jacket 36. Materials used in one preferred embodiment of the present invention include one or more layers of non-metallic coatings, such as thermoplastic and/or thermoset materials. The resulting armour 40 is referred to as "coated armour." The coated armour 40 of the present invention comprises a band of metallic material 42, such as steel or galvanized steel, and one or more layers of coating material 44, that is wrapped, sprayed, sintered, or extruded onto the metallic material 42. The preferred thickness of the coating 44 is from about 0.1 mils to about 70.0 mils.

The coating material 44 can be one or more layers of one or more thermoplastic materials. Preferred thermoplastic materials are acrylonitrile-butadiene-styrene (ABS) copolymers, acetals, tetrafluroethylene-propylene copolymers, hexafluropropylene-vinylidene copolymers, polyamides, arimids, polyaryl sulfones, polyaryl ethers, polyesters, polyether sulfones, polyamides, polyamide-imides, polyphenylene sulfide, poly sulfones, polyetherketones, polyetheretherketones, polyetherketonesetheretherketones, polyaryletherketones, polyethylenes, polypropylenes, epoxies, and copolymers, mixtures, blends and alloys thereof.

Preferred thermoset materials are copolymers of acrylonitrile and butadiene, saturated copolymers of acrylonitrile and butadiene, fluroelastomers, polychloroprenes, and copolymers, mixtures, blends and alloys thereof.

As described above, the present invention is a multiconductor electrical cable for use in a subterranean wellbore that has increased resistance to swelling by preventing hydrocarbons or water from contacting the jacket of elastomeric material, and/or by preventing corrosion of the metallic outer protective armour so that any swelling will be contained.

Whereas the present invention has been described in particular relation to the drawings attached hereto, it should be understood that other and further modifications, apart from those shown or suggested herein, may be made within the scope of the present invention as defined in the claims.

## Claims

1. A multiconductor electrical cable for use in a subterranean wellbore, comprising :
a plurality of electrical conductors; at least one layer of an insulation material surrounding the plurality of electrical conductors; a jacket of elastomeric material surrounding the insulated electrical conductors; a fluid barrier surrounding the jacket; and an outer armour surrounding the fluid barrier.

2. A multiconductor electrical cable of Claim 1, wherein the insulation material is selected from the group consisting essentially of polyolefin elastomers, ethylene propylene diene methylene, ethylene propylene rubber, polychloroprene, polyimide, fluroelastomers, polypropylene, polyethylene, polyether, and copolymers, mixtures, blends and alloys thereof.

3. A multiconductor electrical cable of Claim 1 or Claim 2, wherein the jacket is formed from an elastomeric material selected from the group consisting essentially of nitrile rubber, ethylene propylene, ethylene propylene diene methylene terpolymer, polychloroprene, polyolefin elastomer, polyethylene, polypropylene, polyether, and copolymers, mixtures, blends and alloys thereof.

4. A multiconductor electrical cable of any of Claims 1 to 3, wherein the fluid barrier comprises at least one layer of material selected from the group consisting essentially of polyethylene, polypropylene, polyvinyl fluoride, polyvinylidene fluoride, fluorinated ethylene propylene, polytetrafluoroethylene, and blends, mixtures and alloys thereof.

5. A multiconductor electrical cable of any of the preceding claims, wherein the outer armour comprises a helically wrapped layer of metallic material.

6. A multiconductor electrical cable of Claim 5, wherein the metallic material has a non-metallic anti-corrosion coating.

7. A multiconductor electrical cable of Claim 6, wherein the anti-corrosion coating comprises at least one layer of material selected from the group consisting essentially of thermoplastic materials and thermoset materials.

8. A multiconductor electrical cable of Claim 7, wherein the thermoplastic materials are selected from the group consisting of acrylonitrile-butadiene-styrene (ABS) copolymers, acetals, tetrafluroethylene-propylene copolymers, hexafluropropylene-vinylidene copolymers, polyamides, arimids, polyaryl sulfones, polyaryl ethers, polyesters, polyether sulfones, polyamides, polyamide-imides, polyphenylene sulfide, poly sulfones, polyetherketones, polyetheretherketones, polyetherketonesetheretherketones, polyaryletherketones, polyethylenes, polypropylenes, epoxies, and copolymers, mixtures, blends and alloys thereof.

9. A multiconductor electrical cable of Claim 7, wherein the thermoset materials are selected from the group consisting of copolymers of acrylonitrile and butadiene, saturated copolymers of acrylonitrile and butadiene, fluroelastomers, polychloroprenes, and copolymers, mixtures, blends and alloys thereof.

10. A coated armour on electrical cable for use in subterranean wellbores, comprising: a band of metallic armour material; and at least one layer of non-metallic coating material on the metallic armour material, the coating material selected from the group consisting essentially of thermoplastic materials and thermoset materials.

11. A coated armour of Claim 10, wherein the thermoplastic materials are selected from the group consisting of acrylonitrile-butadiene-styrene (ABS) copolymers, acetals, tetrafluroethylene-propylene copolymers, hexafluropropylene-vinylidene copolymers, polyamides, arimids, polyaryl sulfones, polyaryl ethers, polyesters, polyether sulfones, polyamides, polyamide-imides, polyphenylene sulfide, poly sulfones, polyetherketones, polyetheretherketones, polyetherketonesetheretherketones, polyaryletherketones, polyethylenes, polypropylenes, epoxies, and copolymers, mixtures, blends and alloys thereof.

12. A coated armour of Claim 10, wherein the thermoset materials are selected from the group consisting of copolymers of acrylonitrile and butadiene, saturated copolymers of acrylonitrile and butadiene, fluroelastomers, polychloroprenes, and copolymers, mixtures, blends and alloys thereof.

13. A multiconductor electrical cable for use in a subterranean wellbore, comprising: a plurality of electrical conductors; at least one layer of an insulation material surrounding the plurality of electrical conductors; a jacket of elastomeric material surrounding the insulated electrical conductors; and an outer armour surrounding the jacket, the armour having a non-metallic anti-corrosion coating.

14. A multiconductor electrical cable of Claim 13, wherein the insulation material is selected from the group consisting essentially of polyolefin elastomers, ethylene propylene diene methylene, ethylene propylene rubber, polychloroprene, polyimide, fluroelastomers, polypropylene, polyethylene, polyether, and copolymers, mixtures, blends and alloys thereof.

15. A multiconductor electrical cable of Claim 13 or Claim 14, wherein the jacket is formed from an elastomeric material selected from the group consisting essentially of nitrile rubber, ethylene propylene, ethylene propylene diene methylene terpolymer, polychloroprene, polyolefin elastomer, polyethylene, polypropylene, polyether, and copolymers, mixtures, blends and alloys thereof.

16. A multiconductor electrical cable of any of Claims 13 to 15, wherein the anti-corrosion coating comprises at least one layer of material selected from the group consisting essentially of thermoplastic materials and thermoset materials.

17. A multiconductor electrical cable of Claim 16, wherein the thermoplastic materials are selected from the group consisting of acrylonitrile-butadiene-styrene (ABS) copolymers, acetals, tetrafluroethylene-propylene copolymers, hexafluropropylene-vinylidene copolymers, polyamides, arimids, polyaryl sulfones, polyaryl ethers, polyesters, polyether sulfones, polyamides, polyamide-imides, polyphenylene sulfide, poly sulfones, polyetherketones, polyetheretherketones, polyetherketonesetheretherketones, polyaryletherketones, polyethylenes, polypropylenes, epoxies, and copolymers, mixtures, blends and alloys thereof.

18. A multiconductor electrical cable of Claim 16, wherein the thermoset materials are selected from the group consisting of copolymers of acrylonitrile and butadiene, saturated copolymers of acrylonitrile and butadiene, fluroelastomers, polychloroprenes, and copolymers, mixtures, blends and alloys thereof.

19. A multiconductor electrical cable for use in a subterranean wellbore, comprising: a plurality of electrical conductors; at least one layer of an insulation material surrounding the plurality of electrical conductors; a jacket of elastomeric material surrounding the insulated electrical conductors; a fluid barrier surrounding the jacket; and an outer armour surrounding the fluid barrier, the armour having a non-metallic anti-corrosion coating.
